# EUROPÄISCHE PATENTSCHRIFT

(11) **EP 1 871 154 B1**
(45) Veröffentlichungstag und Bekanntmachung des Hinweises auf die Patenterteilung: **17.03.2010**
(21) Anmeldenummer: 06025762.3
(22) Anmeldetag: 13.12.2006
(51) Int. Cl.: H05K 7/14

(54) **Vorrichtung zur Aufnahme einer Mehrzahl einzelner Wechselrichter**
Equipment retaining several individual inverters
Dispositif pour recevoir une pluralité d'onduleurs individuels

(30) Priorität: 22.06.2006 DE 202006009906 U
(43) Veröffentlichungstag der Anmeldung: 26.12.2007
(73) Patentinhaber: SMA Solar Technology AG, 34266 Niestetal (DE)
(72) Erfinder: Cramer, Günther, D-34128 Kassel (DE); Engel, Bernd, Dr., D-38302 Wolfenbüttel (DE)
(74) Vertreter: Walther, Walther & Hinz GbR

(56) Entgegenhaltungen:
- FR-A- 2 727 805
- JP-A- 7 194 140
- JP-A- 2001 185 875
- JP-A- 2001 284 626
- US-A- 4 519 657
- US-A1- 2004 139 689

## Beschreibung

Die Erfindung betrifft eine Vorrichtung mit einer Mehrzahl einzelner Wechselrichter.

Bei einer leistungsstarken Stromerzeugungsanlage, beispielsweise einer PV-Anlage mit einer Vielzahl von Solarmodulen, besteht entweder die Möglichkeit, einen einzigen leistungsstarken Wechselrichter einzusetzen oder aber eine Vielzahl einzelner Wechselrichter. Insbesondere bei Verwendung der Multi-String ® Technologie, bei der einzelnen Strings von Photovoltaik-Modulen einer PV-Anlage einzelne Wechselrichter zugeordnet sind, ist eine Vielzahl von in ihrer Leistung kleineren Wechselrichtern vorgesehen. Bislang ist es nun so, dass diese Vielzahl von Wechselrichtern dezentral an oder in Gebäuden angeordnet wird, wobei in jüngster Zeit allerdings von den Installateuren und auch von den Betreibern zentrale Anlagen gewünscht werden.

Die Verwendung mehrerer kleiner Wechselrichter anstelle eines großen leistungsstarken Wechselrichters hat auch den Vorteil, dass aufgrund der Serienfertigung eine Vielzahl kleiner Wechselrichter bedeutend preiswerter ist als ein entsprechend großer leistungsstarker Wechselrichter. Auch aus diesem Grunde wird die Verwendung von vielen kleinen Wechselrichtern gegenüber einem großen leistungsstarken Wechselrichter deutlich präferiert.

Aus der US 6,317,348 B1 ist eine unterbrechungsfreie Stromversorgung bekannt, die unter anderem einen Wechselrichter, eine Batterie und eine Batterieladeeinrichtung umfasst. Gegenstand der Lehre der US 6,317,348 B1 ist der modulare Aufbau einer unterbrechungsfreien Stromversorgung mit mehreren Versorgungseinheiten in einem Gestell.

Um nun eine Vielzahl von Wechselrichtern gleichzeitig platzsparend und gegen Diebstahl geschützt aufnehmen zu können, ist erfindungsgemäß eine Vorrichtung mit einer Mehrzahl einzelner Wechselrichter vorgesehen, wobei die Vorrichtung ein Gestell umfasst, wobei an den Seitenwänden des Gestells die einzelnen Wechselrichter lösbar anbringbar sind, wobei das Gestell mindestens einen Klemmblock zur Aufnahme von Kabeln für die Stromzu- und abfuhr aufweist, wobei die Verkabelung innerhalb des Gestells bereits so vorgenommen ist, dass die einzelnen Wechselrichter lediglich im Gestell angebracht werden müssen, und mit ihren stromzu- und abführenden Kabeln mit den entsprechenden Klemmen des mindestens einen Klemmblock verbunden werden müssen, wobei die Seitenwände, auf die die Wechselrichter aufgeschraubt sind, von innen an dem Gestell angeschraubt sind, wobei die letzte Seitenwand von außen an das Gestell angesetzt wird, wobei bei zwei Gestellen diese derart miteinander auf einer gemeinsamen Grundplatte angeordnet sind, dass sich die zuletzt angebrachten Seitenwände unmittelbar benachbart zueinander befinden.

Hieraus ergibt sich Folgendes: Das Gestell dient, wie bereits ausgeführt, der Aufnahme einer Vielzahl von Wechselrichtern, wobei die Verkabelung innerhalb des Gestells bereits so vorgenommen ist, dass die einzelnen Wechselrichter lediglich an dem Gestell angebracht werden müssen und mit ihren Strom zu- und abführenden Kabeln mit den entsprechenden Klemmen des mindestens einen Klemmblockes verbunden werden müssen. Hierbei besteht dann die Möglichkeit, den Wechselrichtern einzelne Phasen L1 bis L3 zuzuordnen, was schlussendlich nur möglich ist, wenn die einzelnen Wechselrichter einen sogenannten "Cluster" bilden.

Die Seitenwände des Gestells sind als Bleche ausgebildet, auf die die Wechselrichter aufgeschraubt werden. Die Verschraubung erfolgt von innen, so dass ein Diebstahl erschwert ist. Die letzte Seitenwand wird dann bei der Montage von außen angesetzt. Werden zwei derartige Türme nebeneinander auf einer gemeinsamen Grundplatte befestigt, befinden sich die zuletzt eingebrachten Seitenwände unmittelbar benachbart aneinander, um, wie bereits ausgeführt, einen Diebstahl zu erschweren.

Wie bereits ausgeführt, weist der Klemmblock Klemmen für von einer Stromquelle, zum Beispiel einer PV-Anlage, ankommende Kabel auf, ebenso wie Klemmen für von der Mehrzahl von Wechselrichtern abgehende Kabel. Der mindestens eine Klemmblock ist von außen zugänglich; der Klemmblock ist allerdings durch eine den Klemmblock abschirmende Haube oder Platte wetterfest abgedeckt, das heißt insbesondere gegen Schlagregen geschützt.

Nach einem weiteren Merkmal der Erfindung ist vorgesehen, dass das Gestell einer jeden Aufnahme für einen Wechselrichter zugeordnet mindestens einen Schalter aufweist, um den Wechselrichter von der DC-Seite freizuschalten. Ein solcher von außen zugänglicher Schalter hat den Vorteil, dass, um einen Wechselrichter von beispielsweise einer PV-Anlage freizuschalten, nicht die Stromklemmen gelöst werden müssen, sondern lediglich der Schalter umgelegt wird.

Das Gestell ist insbesondere als Gehäuse ausgebildet, dass heißt, das Gehäuse bildet in sich eine geschlossene Einheit in Form eines Turmes, der nicht nur zu den Seiten, sondern auch oben und unten geschlossen ist, so dass ein solcher Turm auch im Außenbereich einsetzbar ist. Das Gestell ist im Querschnitt viereckig ausgebildet, wobei hierbei die Möglichkeit besteht, solche Gestelle auch zur Erhöhung der Anzahl der Aufnahmen für Wechselrichter in Reihe zu stellen und elektrisch miteinander zu koppeln; hierbei sind dann die einzelnen Gestelle durch eine gemeinsame Grundplatte miteinander verbunden.

Anhand der Zeichnungen wird die Erfindung nachstehend beispielhaft näher erläutert.
- Fig. 1: zeigt eine Vorrichtung zur Aufnahme einer Mehrzahl von Wechselrichtern;
- Fig. 2: zeigt eine Anordnung zweier solcher Vorrichtungen nebeneinander, die auf einer gemeinsamen Grundplatte angeordnet sind;

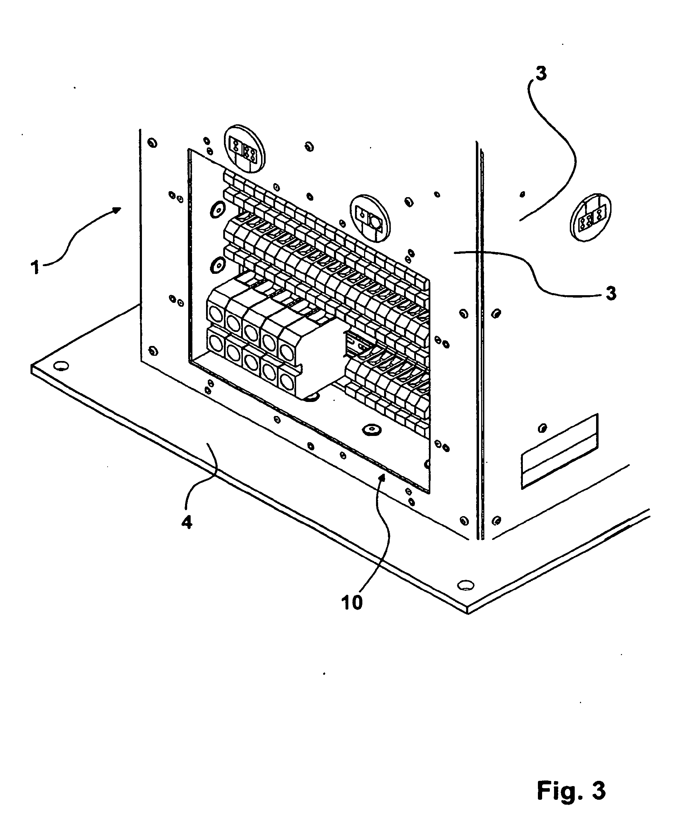

- Fig. 3: zeigt in vergrößerter Darstellung den Klemmbock.

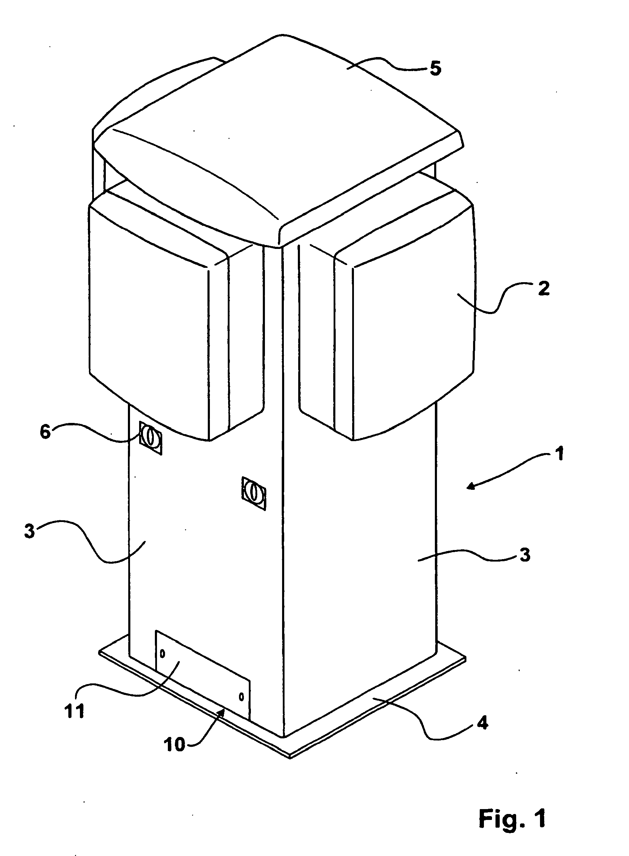

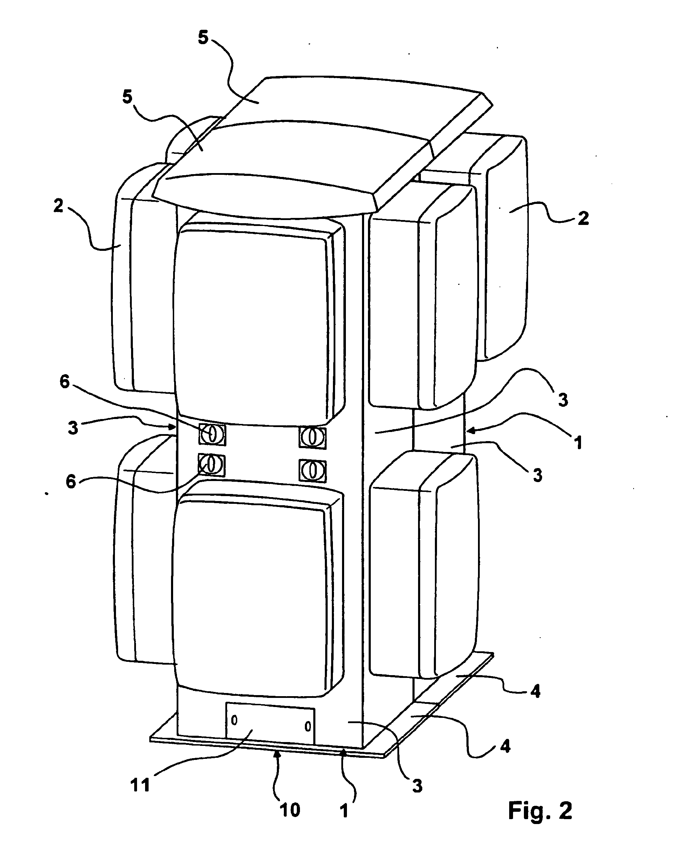

Gemäß den Fig. 1 und 2 ist die Vorrichtung zur Aufnahme mehrerer Wechselrichter mit 1 bezeichnet. Die Wechselrichter tragen das Bezugszeichen 2. Erkennbar ist die Vorrichtung nach Art eines Turmes ausgebildet und weist im Querschnitt eine viereckige Form auf. Die Form besteht als Gestell aus vier Seitenblechen 3, die in Verbindung mit der Grundplatte 4 und dem Deckel 5 das Gehäuse zur Aufnahme der mit 2 bezeichneten Wechselrichter dienen. Jedem Wechselrichter ist ein Schalter 6 zugeordnet, wobei durch den Schalter 6 der jeweilige Wechselrichter von der DC-Seite freigeschaltet werden kann.

Gegenstand der Erfindung ist ebenfalls ein Klemmblock 10, der einzelne Klemmen zur klemmbaren Aufnahme von Kabeln (nicht dargestellt) aufweist. Der Klemmblock 10 ist in das Innere des Gehäuses bzw. des Turmes versetzt in dem Gehäuse 1 angeordnet und wird nach Montage der Wechselrichter 2 durch eine Platte 11 verschlossen, um den Klemmblock gegen eintretendes Wasser zu schützen. Die Fixierung der Platte erfolgt durch Schrauben.

Gemäß Fig. 2 ist eine Ausführungsform vorgesehen, bei der zwei derartige Vorrichtungen nebeneinander angeordnet sind, wobei die Grundplatten 4 der beiden Vorrichtungen verbunden sind.

Wie bereits an anderer Stelle erläutert, erfolgt die Verschraubung der Wechselrichter mit den Seitenblechen 3 von innen, um einen Diebstahl der Wechselrichter zu erschweren. An der vierten Seite des Turmes befinden sich keine Wechselrichter, wobei diese Seitenwand von außen befestigt wird. Wenn zwei derartige Türme unmittelbar an dieser Wand benachbart zueinander auf der jeweiligen Grundplatte 4 angeordnet sind, so ist der Zugang in das Innere eines jeden Turmes zur Demontage der Wechselrichter zumindest erschwert.

## Patentansprüche

1. Vorrichtung (1) mit einer Mehrzahl einzelner Wechselrichter (2), umfassend ein Gestell, wobei an den Seitenwänden des Gestells die einzelnen Wechselrichter (2) lösbar anbringbar sind, wobei das Gestell mindestens einen Klemmblock (10) zur Aufnahme von Kabeln für die Stromzu- und abfuhr aufweist,
wobei die Verkabelung innerhalb des Gestells bereits so vorgenommen ist, dass die einzelnen Wechselrichter lediglich im Gestell angebracht werden müssen, und mit ihren strom zu- und abführenden Kabeln mit den entsprechenden Klemmen des mindestens einen Klemmblock verbunden werden müssen,
wobei die Seitenwände, auf die die Wechselrichter aufgeschraubt sind, von innen an dem Gestell angeschraubt sind, wobei die letzte Seitenwand von außen an das Gestell angesetzt wird, wobei bei zwei Gestellen diese derart miteinander auf einer gemeinsamen Grundplatte angeordnet sind, dass sich die zuletzt angebrachten Seitenwände unmittelbar benachbart zueinander befinden.

2. Vorrichtung nach Anspruch 1,
**dadurch gekennzeichnet,**
**dass** der mindestens eine Klemmblock (10) wetterfest, zum Beispiel durch eine abnehmbare Haube oder Platte, geschützt ist.

3. Vorrichtung nach wenigstens einem der vorangehenden Ansprüche,
**dadurch gekennzeichnet,**
**dass** das Gestell einer jeden Aufnahme für einen Wechselrichter (2) zugeordnet mindestens einen Schalter (6) aufweist, um den Wechselrichter (2) von der DC-Seite freizuschalten.

4. Vorrichtung nach wenigstens einem der vorangehenden Ansprüche,
**dadurch gekennzeichnet,**
**dass** das Gestell (1) als Gehäuse ausgebildet ist.

5. Vorrichtung nach Anspruch 1,
**dadurch gekennzeichnet,**
**dass** das Gestell (1) im Querschnitt viereckig ausgebildet ist.

6. Vorrichtung nach wenigstens einem der vorangehenden Ansprüche,
**dadurch gekennzeichnet,**
**dass** das Gestell (1) Wandelemente, zum Beispiel in Form von Blechen aufweist, an denen die Wechselrichter (2) angeschraubt sind.

## Claims

1. Device (1) with a plurality of individual inverters (2), comprising a frame, wherein the individual inverters (2) are detachably mountable at the side walls of the frame, wherein the frame has at least one terminal block (10) for reception of cables for current input and output, wherein the cabling is already undertaken within the frame so that the individual inverters merely have to be mounted in the frame and connected by their current input and output cables with the corresponding terminals of the at least one terminal block, wherein the side walls, on which the inverters are screw-connected, are screw-connected with the frame from the inside, wherein the last side wall is placed from outside against the frame, and wherein in the case of two frames these are arranged together on a common base plate in such a manner that the side walls mounted last are located directly adjacent to one another.

2. Device according to claim 1, **characterised in that** the at least one terminal block (10) is protected against weather, for example by a removable hood or plate.

3. Device according at least one of the preceding claims, **characterised in that** the frame comprises at least one switch (6), which is associated with each mount for an inverter (2), in order to switch the inverter (2) free from the DC side.

4. Device according to at least one of the preceding claims, **characterised in that** the frame (1) is constructed as a housing.

5. Device according to claim 1, **characterised in that** the frame (1) is constructed to be four-cornered in cross-section.

6. Device according to at least one of the preceding claims, **characterised in that** the frame (1) has wall elements, for example in the form of plates, with which the inverters (2) are screw-connected.

## Revendications

1. Dispositif (1) comportant une pluralité d'onduleurs (2) et comprenant un châssis, dans lequel les différents onduleurs (2) peuvent être fixés aux parois latérales du châssis de façon démontable et où le châssis comporte au moins un bornier (10) destiné à recevoir des câbles pour l'amenée et le départ du courant,
dans lequel le câblage présent à l'intérieur du bâti est déjà réalisé de telle manière qu'on ait simplement à installer les différents onduleurs dans le châssis et à raccorder leurs câbles d'amenée et de départ du courant aux bornes correspondantes de l'au moins un bornier,
dans lequel les parois latérales, sur lesquelles les onduleurs sont vissés, sont vissées au châssis de l'intérieur, la dernière paroi latérale étant fixée au châssis de l'extérieur, cependant que, dans le cas de deux châssis, ces derniers sont disposés ensemble sur une plaque de base commune de telle manière que les parois latérales montées en dernier lieu se trouvent directement adjacentes l'une à l'autre.

2. Dispositif selon la revendication 1,
**caractérisé**
**en ce que** l'au moins un bornier (10) est protégé des intempéries, par exemple par un capot ou une plaque amovible.

3. Dispositif selon au moins l'une des revendications précédentes
**caractérisé**
**en ce que**, pour chaque logement destiné à recevoir un onduleur (2), le châssis comporte au moins un commutateur (6) correspondant pour déconnecter l'onduleur (2) du côté courant continu.

4. Dispositif selon au moins l'une des revendications précédentes,
**caractérisé**
**en ce que** le châssis (1) est réalisé sous la forme d'un caisson.

5. Dispositif selon la revendication 1
**caractérisé**
**en ce que** le châssis (1) est polygonal en coupe transversale.

6. Dispositif selon au moins l'une des revendications précédentes,
**caractérisé**
**en ce que** le châssis (1) comporte des éléments de parois, par exemple formés de tôles, auxquels les onduleurs (2) sont vissés.
